# EUROPEAN PATENT SPECIFICATION

(11) **EP 3 882 131 B1**
(45) Date of publication and mention of the grant of the patent: **29.04.2026**
(21) Application number: 20305270.9
(22) Date of filing: 16.03.2020
(51) Int. Cl.: B64C 11/20, B64D 15/12, F03D 1/06, F03D 80/40

(54) **IMPROVEMENT DEICER AERODYNAMIC INTEGRATION**
VERBESSERUNG DER AERODYNAMISCHEN INTEGRATION EINES ENTEISERS
AMÉLIORATION D'INTÉGRATION AÉRODYNAMIQUE DE DÉGIVREUR

(43) Date of publication of application: 22.09.2021
(73) Proprietor: Ratier-Figeac SAS, 46101 Figeac Cedex (FR)
(72) Inventor: PRUNET, Ludovic, 46120 Themines (FR); ANDRZEJEWSKI, Arnaud, 46100 Lissac et Mouret (FR)
(74) Representative: Dehns

(56) References cited:
- EP-A1- 0 872 417
- GB-A- 662 110
- US-A- 2 464 273
- US-A- 2 992 317
- US-A1- 2005 189 345
- US-A1- 2020 080 545
- UNKNOWN: "Manual No. E0107.72A Operation And Maintenance Manual", 1 April 2004 (2004-04-01), Rosenheim, Germany, pages 1 - 33, XP093264042, Retrieved from the Internet <URL:https://hoffmann-prop.com/ServiceDocuments/E0107.72.pdf> [retrieved on 20250327]
- UNKNOWN: "Propeller Owner/Operator Information Manual MPC-28", 7 March 2011 (2011-03-07), pages 1 - 42, XP093264032, Retrieved from the Internet <URL:https://mccauley.txtav.com/-/media/mccauley/files/manuals/mpc28ow.ashx> [retrieved on 20250327]

## Description

The present disclosure relates to improvements in de-icers for aircraft blades and methods for manufacturing aircraft blades having these de-icers.

### Background

Electrical deicing can be used for aircraft wings or blades. Such electrical deicing can be used on the leading edge of a helicopter blade or a wind turbine blade, for example. In some systems, a deicing complex may be made integrally with the metal blade that is to be de-iced.

Improvements in such de-icing systems are, however, needed and the examples described herein relate to such improvements.

US 2005/0189345 A1 discloses a heater mat for heating aerodynamic surfaces of an aircraft.

US 2 464 273 A discloses an electrical device for de-icing airfoils. US 2020/0080545 A1 discloses a protective shield for electrically insulating a heating mat of a wind turbine rotor blade. EP 0 872 417 A1 discloses a mechanical de-icer for aircraft surfaces.

### Summary

According to a first aspect, a blade de-icing system is described as provided in claim 1.

In any of the examples described herein, said leading edge may be tapered.

In any of the examples described herein, at its leading edge, the body of said blade may also have a recessed section for receiving the de-icing component.

In any of the examples described herein, the de-icing component may be shaped and sized so as to fit onto said recessed section of said blade body so that the outer surface of the de-icer component is flush with the outer surface of the body.

In any of the examples described herein, said de-icer component may comprises a heating element provided in a matrix. In some examples, the matrix may be epoxy resin.

In any of the examples described herein, the paint may be provided so as to cover the junction between the de-icer component and anti-erosion strip.

A method of manufacturing the blade de-icing system above is also described as provided in claim 8.

In some examples said de-icer component comprises a heating element provided in a matrix and the matrix may be epoxy resin.

In any of the examples described herein the paint may be provided so as to cover at least a part of an edge of the de-icer component that is furthest away from said apex and said anti-erosion strip.

In any of the examples described herein the paint may be provided so as to cover the connection between the edge of the de-icer component that is furthest away from said anti-erosion strip and the end of the tapered section of the blade leading edge.

In any of the examples described herein, the step of providing said paint may comprise providing said paint so as to cover at least a part of an edge of the de-icer component that is furthest away from said apex and said anti-erosion strip.

In any of the examples described herein, the step of providing said paint may comprise providing said paint so as to cover the connection between the edge of the de-icer component that is furthest away from said anti-erosion strip and the end of the tapered section of the blade leading edge.

In any of the examples described herein the blade may be the blade of a propeller.

### Description of the Figures

Certain embodiments of the present disclosure will now be described in greater detail by way of example only and with reference to the accompanying drawing in which:
Figure 1a shows an exploded view of an example of a blade having a new type of deicing system, which is not within the scope of the claims.
Figure 1b shows the system of figure 1a when assembled.
Figure 2a shows an exploded view of an example of another new type of de-icing system as described herein.
Figure 2b shows the system of figure 2a when assembled.

### Detailed Description

The de-icing systems described herein comprises a blade such as a blade for use in a helicopter, wind turbine, aircraft etc. that would require de-icing during use. The embodiments herein are described with reference to a propeller blade.

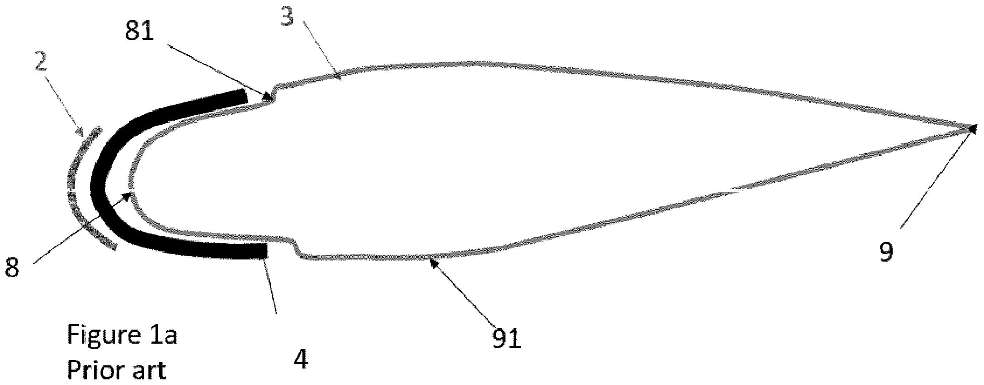

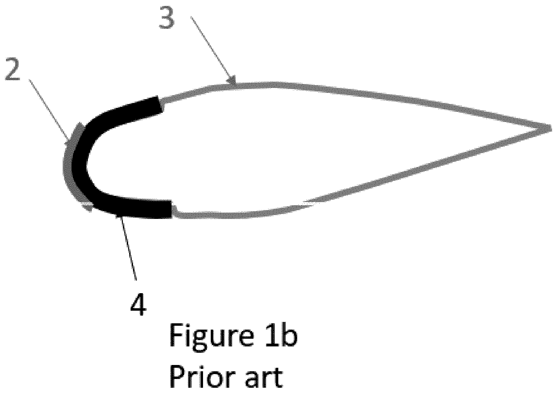

A new type of blade de-icing system is described herein and shown in figure 1. The de-icing system comprises the blade 10 that is to be de-iced. The blade has a main body 3 which extends from a leading edge 8 to a trailing edge 9. In use, the trailing edge would be attached to the rotor of a helicopter (not shown). The body 3 may have a section 91 which has a larger thickness than a section at the leading edge which is recessed 81, as shown in figure 1a. in some examples the recess is formed via tapering, and in other examples the recess is formed via providing a step in the thickness of the body 3 of the blade 10. A de-icer component 4 is positioned in the recess 81 at the leading edge 8 and an anti-erosion strip 2 may be provided on said de-icing component 4.

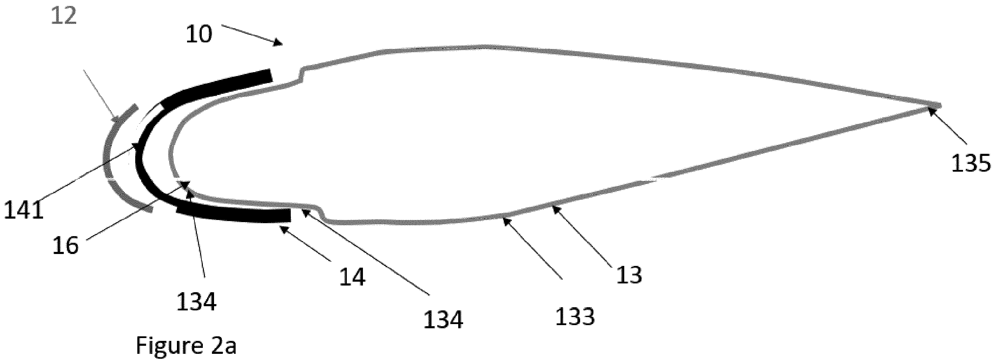

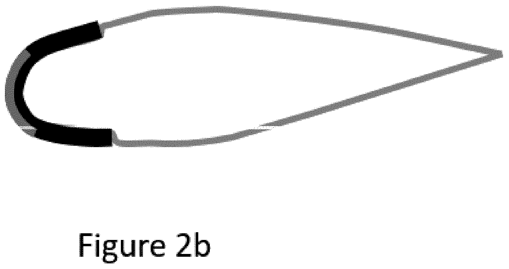

A variant of the examples shown in figures 1a and 1b is shown in figures 2a and 2b. In this embodiment the blade has a main body 13 extending between a trailing edge 135 and a leading edge 11. In use, the blade would be attached to the rotor of a helicopter, or body of the aircraft or wind turbine by a blade root which is usually between the leading edge 11 and the trailing edge 135. The blade may be attached by known techniques. The body 13 of the blade has a main section 133 which in the example shown in figure 1 has a first thickness, which extends to a second section 134, which has a second thickness, the second thickness being less than the first thickness as shown in figure 2a to form a recess in the main body 13 of the blade, as in the examples shown in figures 1a and 1b. Again; this recess may be formed gradually by tapering, or may alternatively formed by a step in the reduction of thickness. This second, recessed, section 134 extends in the direction of and to the apex 16 of the blade at its leading edge 11.

A de-icer component 14 is provided and may be sized and shaped so that it fits snugly within this recessed section 134 of the main body 13 having the reduced thickness. The de-icer component 14 may be sized and shaped so that, when provided in the recessed section 134, the outer surface of the de-icer component 14 is flush with the outer surface of the first section 133 of the blade so that the surfaces are flush with each other and there is no step between their outer surfaces.

The de-icer component 14 covers at least part of the blade leading edge 11 as shown in figures 2a and 2b. The de-icer component 14 may also extend to cover both the upper and lower surfaces of the blade when in use.

In some examples, the de-icer component 14 may comprise a strip or strips of a heating element embedded in a resin or other matrix that provides anti-erosion protection and also insulates the heating element. In some examples the heating element may comprise a strip of metallic foil that is resistive and generates heat when connected to an electric power supply by the Joule Effect. Other heating elements and matrices could also be envisaged.

An anti-erosion strip 12 is also provided so as to be positioned on or at the apex 16 of the leading edge, and on top of the de-icing component 14 as shown in figures 2a and 2b. As shown in figures 2a and 2b the de-icer component 14 is shaped so that it has an area of reduced thickness at the apex 16, to form a recess 141 in the de-icing component for receiving the anti-erosion strip 12.

The recess 141 of the de-icing component 14 is sized and shaped and the anti-erosion strip 12 is also sized and shaped so that the anti-erosion strip 12 fits snugly in the recess 141 so that the outer surface of the anti-erosion strip 12 is flush with the outer surface of the de-icing component 14 so that there is no step in the levels of the outer surfaces when the anti-erosion strip 12 is in position.

The anti-erosion strip 12 is a replaceable strip. The anti-erosion strip 12 is a self-adhesive polyurethane film. Such adhesive strips are easily debonded and replaced by a new one. The company 3M are suppliers of such anti-erosion strips. In other examples not within the scope of the claims, the strip may be a thermoplastic film with adhesive added thereto. Any other material which provides good resistance to erosion may also/alternatively be used, but is not within the scope of the claims.

The main body of the blade also has a layer of paint (not shown) that is provided on the external surface of the body 13 of the blade 10. The paint comprises an anti-erosion paint. In some examples, this may be sprayed onto the body of the blade after the blade has been finished or equipped. This anti-erosion paint may provide erosion protection to the remainder of the propeller blade. The paint is applied to the blade so that it covers at least a part or edge of the de-icer component 14 so as to provide a smooth transition between the junction comprising the edge of the de-icer component 14 that is provided in the recess of the blade and the outer surface of the blade that is adjacent to that recess.

A method of manufacturing this blade 10 having a de-icing system may comprise providing this blade 10 via known techniques so that the blade 10 has the features described above, i.e. a main body 13 that extends to a tapered leading edge 11 apex 16. The method further comprises providing a de-icing component 14 as described above, wherein the deicing component 14 has a recessed section 141 and bonding the de-icing component 14 to the blade 10 so that the recessed section 141 of the de-icing component is positioned at the apex 16 of the leading edge 11 of the blade. In the examples wherein the de-icing component 14 is provided so as it is positioned in a recess in the blade, the method may also comprise first forming this recess in the blade, either by tapering the thickness or providing a stepped change in the thickness of the blade.

The method further comprises providing the anti-erosion strip 12 so that it is positioned so as to fit snugly within the recessed section 141 of the de-icing component 14 so that the outer surface of the anti-erosion strip 12 is flush with the outer surface of the de-icing component 14 as shown in figure 2b.

The step of providing the self-adhesive strip comprises adhering the strip 12 to the de-icing component 14 and more specifically adhering the strip 12 to the recessed section 141 of the de-icing component 14 so that it is positioned at the apex of the blade 10 in use and so that there is no step between the anti-erosion strip 12 and the de-icer component 14. The method also comprises providing paint on the external surface of the body 13 of the blade 10 as described above.

In this method, the de-icer component 14 is therefore formed so that it is bonded to the tapered leading edge of the blade 10 and the anti-erosion adhesive strip 12 is in turn also bonded to the de-icer component 14. The anti-erosion strip 12 is a polyurethane film strip and is self-adhesive.

The systems and methods described herein provide advantages over known de-icing systems and methods as the blades also have improved aerodynamic properties.

In addition to this, since the anti-erosion device is integrated with the de-icer component 14 via an adhesive bond, the combination of the anti-erosion strip 12 and the de-icer component 14 form a smooth outer surface/shape on the outer surface of the blade after the strip 12 has been bonded to the de-icer. This improves the aerodynamic properties of the blade/propeller in contrast to a situation wherein a step is present between the anti-erosion strip 12 and the de-icer component 14. If a step was present between these two components, aerodynamic turbulences would be generated, which, in the case of a propeller would reduce its efficiency.

## Claims

1. A blade de-icing system comprising:
said blade (10) having a body (13) extending between a leading edge (11) and a trailing edge (135), said leading edge (11) comprising an apex (16);
said system comprising a de-icer component (14) having a recess (141) formed therein and being positioned on said leading edge (11) of said blade (10) so that said de-icer component (14) covers and extends away from said apex (16) and so that said recess (141) is positioned at said apex (16) of said leading edge (11); and
an anti-erosion strip (12) provided in said recess (141) of said de-icer component (14);
wherein said anti-erosion strip (12) and said recess (141) are sized and shaped such that said anti-erosion strip (12) fits within said recess (141) so that outer surface of said anti-erosion strip is flush with the outer surface of said de-icer component (14);
**characterised in that**:
said anti-erosion strip (12) is a replaceable strip that can be debonded and replaced; and
wherein an anti-erosion paint is provided so as to cover at least a part of the external surface of the body (13) of the blade (10), and so as to cover a junction between the de-icer component (14) and the main body (13) of the blade (10),
wherein said anti-erosion strip (12) is a self-adhesive polyurethane film.

2. The system of claim 1 wherein said leading edge (11) is tapered.

3. The system of any preceding claim wherein, at said leading edge (11), said body of said blade has a recessed section (134).

4. The system of claim 3 wherein said de-icing component (14) is shaped and sized so as to fit onto said recessed section (134) of said blade body (13) so that the outer surface of the de-icer component (14) is flush with the outer surface of the body (13).

5. The system of any preceding claim wherein said de-icer component (14) comprises a heating element provided in a matrix.

6. The system of claim 5 wherein said matrix is epoxy resin.

7. The system of any preceding claim wherein said paint is provided so as to cover a junction between the de-icer component (14) and anti-erosion strip (12):

8. A method of manufacturing a blade de-icing system comprising providing said blade (10) having a body (13) extending between a leading edge (11) and a trailing edge (135), said leading edge (11) comprising an apex (16);
providing a recess (141) in said de-icer component (14) and positioning said deicing component (14) on said leading edge (11) of said blade (10) so that said de-icer component (14) covers and extends away from said apex (16) and so that said recess (141) is positioned at said apex (16) of said leading edge (11);
and
providing an anti-erosion strip (12) in said recess (141) of said de-icer component (14);
wherein said anti-erosion strip (12) and said recess (141) are sized and shaped such that said anti-erosion strip (12) fits within said recess (141) so that outer surface of said anti-erosion strip is flush with the outer surface of said de-icer component (14);
**characterised in that**:
said anti-erosion strip (12) comprises a replaceable strip that can be debonded and replaced; and
further comprising providing an anti-erosion paint on said blade so that said paint covers at least a part of the external surface of the body (13) of the blade (10), so as to cover the junction between de-icer component (14) and said blade body (13), wherein said anti-erosion strip (12) comprises a self-adhesive polyurethane film.

## Patentansprüche

1. Rotorblatt-Enteisungssystem, umfassend:
wobei das Rotorblatt (10) einen Körper (13) aufweist, der sich zwischen einer Vorderkante (11) und einer Hinterkante (135) erstreckt, wobei die Vorderkante (11) einen Scheitelpunkt (16) umfasst;
wobei das System eine Enteiserkomponente (14) umfasst, die eine darin gebildete Vertiefung (141) aufweist und an der Vorderkante (11) des Rotorblatts (10) so angeordnet ist, dass die Enteiserkomponente (14) den Scheitelpunkt (16) bedeckt und sich von diesem weg erstreckt, und so, dass die Vertiefung (141) am Scheitelpunkt (16) der Vorderkante (11) angeordnet ist;
und
einen Erosionsschutzstreifen (12), der in der Vertiefung (141) der Enteiserkomponente (14) bereitgestellt ist;
wobei der Erosionsschutzstreifen (12) und die Vertiefung (141) derart bemessen und geformt sind, dass der Erosionsschutzstreifen (12) in die Vertiefung (141) passt, so dass die Außenfläche des Erosionsschutzstreifens bündig mit der Außenfläche der Enteiserkomponente (14) ist;
**dadurch gekennzeichnet, dass**:
der Erosionsschutzstreifen (12) ein austauschbarer Streifen ist, der abgelöst und ausgetauscht werden kann; und
wobei ein Erosionsschutzanstrich bereitgestellt ist, um mindestens einen Teil der Außenfläche des Körpers (13) des Rotorblatts (10) zu bedecken und eine Verbindung zwischen der Enteiserkomponente (14) und dem Hauptkörper (13) des Rotorblatts (10) zu bedecken,
wobei der Erosionsschutzstreifen (12) eine selbstklebende Polyurethanfolie ist.

2. System nach Anspruch 1, wobei die Vorderkante (11) verjüngt ist.

3. System nach einem der vorhergehenden Ansprüche, wobei der Körper des Rotorblatts an der Vorderkante (11) einen vertieften Abschnitt (134) aufweist.

4. System nach Anspruch 3, wobei die Enteiserkomponente (14) so geformt und bemessen ist, dass sie auf den vertieften Abschnitt (134) des Rotorblattkörpers (13) passt, so dass die Außenfläche der Enteiserkomponente (14) bündig mit der Außenfläche des Körpers (13) ist.

5. System nach einem der vorhergehenden Ansprüche, wobei die Enteiserkomponente (14) ein Heizelement umfasst, das in einer Matrix bereitgestellt ist.

6. System nach Anspruch 5, wobei die Matrix Epoxidharz ist.

7. System nach einem der vorhergehenden Ansprüche, wobei der Anstrich so bereitgestellt ist, dass er eine Verbindung zwischen der Enteiserkomponente (14) und dem Erosionsschutzstreifen (12) bedeckt:

8. Verfahren zur Herstellung eines Rotorblatt-Enteisungssystems, umfassend
Bereitstellen des Rotorblatts (10), das einen Körper (13) aufweist, der sich zwischen einer Vorderkante (11) und einer Hinterkante (135) erstreckt, wobei die Vorderkante (11) einen Scheitelpunkt (16) umfasst;
Bereitstellen einer Vertiefung (141) in der Enteiserkomponente (14) und Anordnen der Enteiserkomponente (14) an der Vorderkante (11) des Rotorblatts (10) so, dass die Enteiserkomponente (14) den Scheitelpunkt (16) bedeckt und sich von diesem weg erstreckt, und so, dass die Vertiefung (141) am Scheitelpunkt (16) der Vorderkante (11) angeordnet ist;
und
Bereitstellen eines Erosionsschutzstreifens (12) in der Vertiefung (141) der Enteiserkomponente (14);
wobei der Erosionsschutzstreifen (12) und die Vertiefung (141) derart bemessen und geformt sind, dass der Erosionsschutzstreifen (12) in die Vertiefung (141) passt, so dass die Außenfläche des Erosionsschutzstreifens bündig mit der Außenfläche der Enteiserkomponente (14) ist;
**dadurch gekennzeichnet, dass**:
der Erosionsschutzstreifen (12) einen austauschbaren Streifen umfasst, der abgelöst und ausgetauscht werden kann; und
ferner umfassend Bereitstellen eines Erosionsschutzanstrichs auf dem Rotorblatt, so dass der Anstrich mindestens einen Teil der Außenfläche des Körpers (13) des Rotorblatts (10) bedeckt, um die Verbindung zwischen der Enteiserkomponente (14) und dem Rotorblattkörper (13) zu bedecken, wobei der Erosionsschutzstreifen (12) einen selbstklebenden Polyurethanfilm umfasst.

## Revendications

1. Système de dégivrage de pale, comprenant :
ladite pale (10) présentant un corps (13) s'étendant entre un bord d'attaque (11) et un bord de fuite (135), ledit bord d'attaque (11) comprenant un sommet (16) ;
ledit système comprenant un composant de dégivrage (14) présentant un évidement (141) formé en son sein et étant positionné sur ledit bord d'attaque (11) de ladite pale (10) de sorte que le composant de dégivrage (14) recouvre le sommet (16) et s'en écarte, et de sorte que ledit évidement (141) soit positionné au niveau dudit sommet (16) du bord d'attaque (11) ; et
une bande anti-érosion (12) prévue dans ledit évidement (141) du composant de dégivrage (14) ;
dans lequel ladite bande anti-érosion (12) et ledit évidement (141) sont dimensionnés et conformés de façon que la bande anti-érosion (12) s'ajuste dans ledit évidement (141) de manière que la surface externe de la bande anti-érosion soit affleurante à la surface externe du composant de dégivrage (14) ;
**caractérisé en ce que** :
ladite bande anti-érosion (12) est une bande remplaçable qui peut être décollée et remplacée ; et
dans lequel une peinture anti-érosion est prévue de manière à recouvrir au moins une partie de la surface externe du corps (13) de la pale (10), et à recouvrir une jonction entre le composant de dégivrage (14) et le corps principal (13) de la pale (10),
dans lequel ladite bande anti-érosion (12) est un film de polyuréthane auto-adhésif.

2. Système selon la revendication 1, dans lequel ledit bord d'attaque (11) est effilé.

3. Système selon l'une quelconque des revendications précédentes, dans lequel, au niveau dudit bord d'attaque (11), ledit corps de ladite pale présente une portion en retrait (134).

4. Système selon la revendication 3, dans lequel le composant de dégivrage (14) est conformé et dimensionné de manière à venir s'adapter sur ladite portion en retrait (134) du corps de pale (13), de sorte que la surface externe du composant de dégivrage (14) soit affleurante à la surface externe dudit corps (13).

5. Système selon l'une quelconque des revendications précédentes, dans lequel le composant de dégivrage (14) comprend un élément chauffant prévu dans une matrice.

6. Système selon la revendication 5, dans lequel ladite matrice est une résine époxy.

7. Système selon l'une quelconque des revendications précédentes, dans lequel ladite peinture est prévue de manière à recouvrir une jonction entre le composant de dégivrage (14) et la bande anti-érosion (12) :

8. Procédé de fabrication d'un système de dégivrage de pale comprenant
la fourniture de ladite pale (10) présentant un corps (13) s'étendant entre un bord d'attaque (11) et un bord de fuite (135), ledit bord d'attaque (11) comprenant un sommet (16) ;
la réalisation d'un évidement (141) dans le composant de dégivrage (14) et la mise en place dudit composant de dégivrage (14) sur le bord d'attaque (11) de ladite pale (10) de sorte que le composant de dégivrage (14) recouvre le sommet (16) et s'en écarte, et de sorte que ledit évidement (141) soit positionné au niveau dudit sommet (16) du bord d'attaque (11) ;
et
la fourniture d'une bande anti-érosion (12) dans ledit évidement (141) du composant de dégivrage (14) ;
dans lequel ladite bande anti-érosion (12) et ledit évidement (141) sont dimensionnés et conformés de façon que la bande anti-érosion (12) s'ajuste dans ledit évidement (141) de manière que la surface externe de la bande anti-érosion soit affleurante à la surface externe du composant de dégivrage (14) ;
**caractérisé en ce que** :
ladite bande anti-érosion (12) comprend une bande remplaçable qui peut être décollée et remplacée ; et
comprenant en outre l'application d'une peinture anti-érosion sur ladite pale de sorte que ladite peinture recouvre au moins une partie de la surface externe du corps (13) de la pale (10), de manière à recouvrir la jonction entre le composant de dégivrage (14) et ledit corps de pale (13), dans lequel ladite bande anti-érosion (12) comprend un film de polyuréthane auto-adhésif.
